# EUROPEAN PATENT SPECIFICATION

(11) **EP 1 668 600 B1**
(45) Date of publication and mention of the grant of the patent: **23.09.2009**
(21) Application number: 04773687.1
(22) Date of filing: 01.10.2004
(51) Int. Cl.: G07C 3/00, G06K 19/07, G06Q 10/00

(54) **IDENTIFICATION METHOD OF APPARATUS TO BE RECALLED**
IDENTIFIKATIONSVERFAHREN UND VORRICHTUNG ZUM ABRUF
PROCEDE D'IDENTIFICATION ET DISPOSITIF DEVANT ETRE RAPPELE

(30) Priority: 01.10.2003 JP 2003343076
(43) Date of publication of application: 14.06.2006
(73) Proprietor: Panasonic Corporation, Kadoma-shi Osaka 571-8501 (JP)
(72) Inventor: MAENISHI, Yasuhiro, Koufu-shi, Yamanashi, 400-0043 (JP); YAMAZAKI, Takuya, Tosu-shi, Saga, 841-0047 (JP); YAMASAKI, Akihito, Kurume-shi, Fukuoka, 830-0001 (JP); NISHIDA, Hiroyoshi, Chuo-ku, Osaka-shi, Osaka 540-6319 (JP); MATSUMOTO, Masaya, Ogouri-shi, Fukuoka, 383-0115 (JP); YOSHIDA, Ikuo, Uji-shi, Kyoto, 611-0012 (JP); KONISHI, Chikashi, Kurume-shi, Fukuoka, 839-0863 (JP)
(74) Representative: Pautex Schneider, Nicole Véronique
(86) International application number: PCT/JP2004/014885
(87) International publication number: WO 2005/034044

(56) References cited:
- EP-A- 1 345 164
- WO-A-00/67546
- WO-A-01/45013
- US-A1- 2002 174 025
- US-A1- 2002 188 259

## Description

### Technical Field

The present invention relates to an identification method of apparatuses to be recalled and a heating method, especially to an identification method of apparatuses to be recalled.

### Background Art

A method for writing, in an IC tag that is set on a printed-circuit board, information items for identifying components mounted on a printed-circuit board or a mounter by which the components are mounted has been proposed conventionally (for example, refer to Japanese Laid-Open Patent application No. 7-321492 publication). This method of reading the information items stored in the IC tag enables acquiring the manufacturing control information of the printed-circuit board, the quality information of the components and the like so as to ensure the traceability. WO 01/45013 also discloses such a recall system.

However, once a printed-circuit board is installed in a product and set at a house or the like, it is practically impossible to trace the manufacturing control information and the like concerning the printed-circuit board today even in the case where the information items for identifying those components or the mounter is written in the IC tag. Therefore, it is difficult to know, at home, which printed-circuit board is used for a product.

Therefore, in the case where household electrical appliances that have already been in the market need to be replaced by new products and some household electrical appliances are to be recalled, there is a problem that the recall must be notified by newspaper advertisement or the like only.

The present invention is conceived in order to solve the above-mentioned problem, and an object of this invention is to provide convenient methods where IC tags are used for identifying locations of objects such as products to be recalled and controlled. More specifically, the object is to provide a method for identifying appliances to be recalled that enables identifying locations of products to be recalled.

### Disclosure of Invention

In order to achieve the above-mentioned objects, the method for identifying appliances to be recalled in the present invention includes: collecting information items stored in an integrated circuit (IC) tag attached to an apparatus via a communication network; checking the collected information items with respectively corresponding information items related to the apparatus to be recalled; and identifying the apparatus to be recalled, among apparatuses, to each of which an IC tag is attached, based on a checking result and one of the information items which indicates a sending source stored in the IC tag.

In this method, the information items stored in the IC tag of an appliance is collected and used for checking whether the current appliance is the appliance to be recalled so as to identify whether the current appliance is the appliance to be recalled. Therefore, unlike the conventional method, it is possible to automatically identify the locations of the appliances to be recalled without making any recall notification of appliances by using newspaper advertisement or the like.

Preferably, the above-mentioned method for identifying appliances to be recalled further includes a display step causing the appliance to display, on its display unit, the notification that it is the appliance to be recalled in the case where the appliance that is identified as the appliance to be recalled in the above-mentioned identification step has a display unit.

Causing the appliance to display, on its display unit, the notification that it is the appliance to be recalled enables the user to immediately know that the appliance in use is the appliance to be recalled. This facilitates the recall of the appliances.

Note that the present invention can be realized not only as a method including these steps but also as an apparatus having units corresponding to these characteristic steps. Also, the present invention can also be realized as a program for causing a computer to execute these steps. In addition, such program can be distributed via a recording medium such as a CD-ROM and the like or a communication medium such as the Internet.

As explained up to this point, the present invention enables automatically identifying the locations of the apparatuses to be recalled without making any recall notification of appliances by using newspaper advertisement and the like. Therefore, it is possible to realize an efficient recall of the appliances.

Also, the present invention is highly practical because it enables identifying the locations of the appliances to be recalled based on the information items stored in the IC tags and surely recalling the appliances.

### Brief Description of Drawings

These and other objects, advantages and features of the invention will become apparent from the following description thereof taken in conjunction with the accompanying drawings that illustrate a specific embodiment of the invention. In the Drawings:
FIG. 1 is a diagram showing the structure of the system of identifying apparatuses to be recalled in a first embodiment of the present invention;
FIG. 2A and 2B are diagrams for respectively explaining an IC tag attached to an air conditioner;
FIG. 3 is a diagram showing the circuit structure of an IC tag reader and writer, and the circuit structure of the IC tag;
FIG. 4 is a block diagram showing the hardware structure of the recall database apparatus;
FIG. 5 is a diagram showing the outline structure of the mounting system for mounting electric components on a printed-circuit board;
FIG. 6 is an external view of a mounter;
FIG. 7 is a plan view showing the main structure of the mounter;
FIG. 8A to 8D are diagrams respectively showing an example of an electric component mounted on a printed-circuit board;
FIG. 9 is a diagram showing an example of a component cassette;
FIG. 10 is a flow chart of processing for identifying products to be recalled performed by a recall database apparatus;
FIG. 11 is a diagram for showing an example of the information items related to products to be recalled, the information items being stored in the database unit;
FIG. 15 is a block diagram showing another structure of the system of identifying appliances to be recalled;
FIG. 16 is an external view of the system of identifying cars to be recalled using an electronic toll collection system (ETC);
FIG. 17 is a flow chart the processing of identifying a printed-circuit board to be recalled by the recall database apparatus;
FIG. 18 to 21 are diagrams respectively showing an example of information items related to products to be recalled stored in a database unit;

### Best Mode for Carrying Out the Invention

### (First Embodiment)

The system of identifying appliances to be recalled in the first embodiment of the present invention will be explained below with reference to figures.

### <system of identifying apparatuses to be recalled>

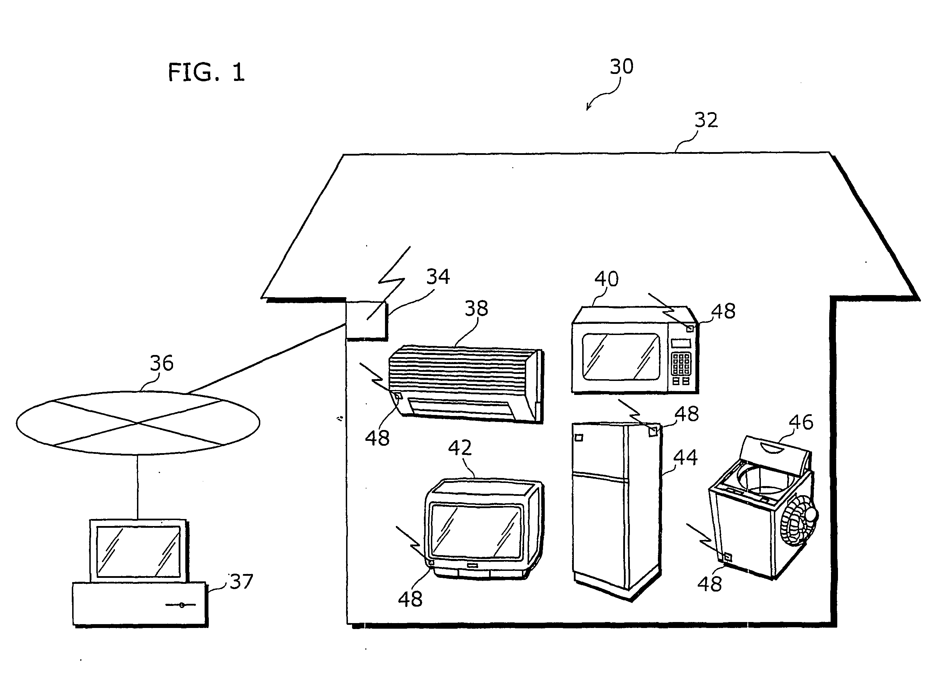

FIG. 1 is a diagram showing the structure of the system of identifying apparatuses to be recalled. The system for identifying apparatuses to be recalled 30 is the system for identifying household electric appliances to be recalled, including household appliances 38 to 46 (an air conditioner 38, an electric oven 40, a television receiving set 42, a refrigerator 44, a washing machine 46) that are set in a house 32, an IC tag reader and writer 34 and a recall database apparatus 37 that is connected to the IC tag reader and writer 34 placed in each house 32 via the Internet 36.

An IC tag 48 is attached to household electric appliances 38 to 46 that are set in the respective houses 32. Each IC tag 48 includes the information items related to each product at the time when it is manufactured (such as a product name, a model, a manufacturing date, a serial number, the names of components in use, the lot number of the components in use, the name of the manufacturing plant where the components in use are manufactured). These information items are read out by the IC tag reader and writer 34 and sends to the recall database apparatus 37 via the Internet 36.

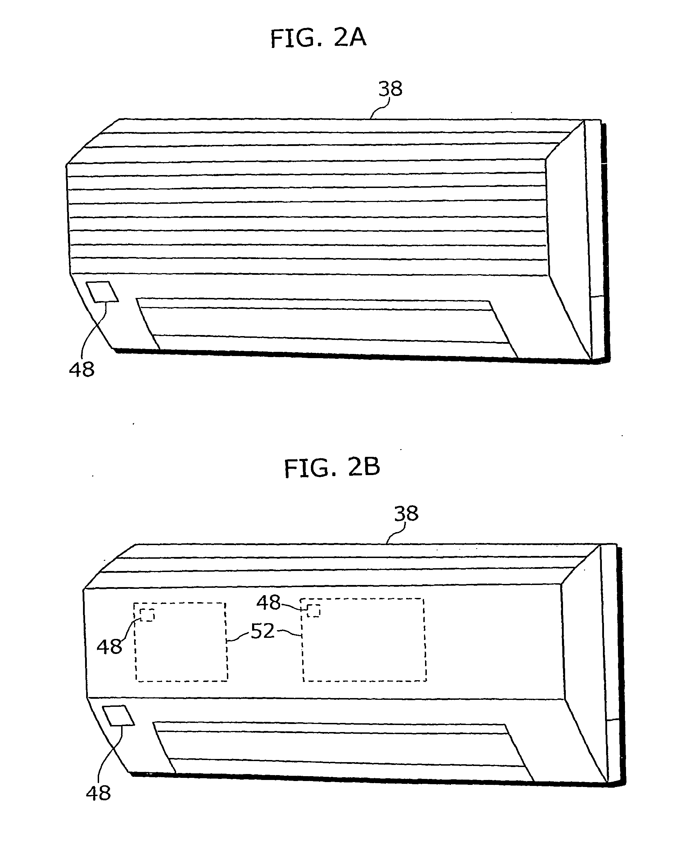

FIG. 2A and 2B are diagrams for respectively explaining the IC tag 48 attached to the air conditioner 38. As shown in FIG. 2A, all the information items at the time of manufacturing the air conditioner 38 may be written in an IC tag 48 and then the IC tag 48 may be attached to the air conditioner 38 itself. Also, as shown in FIG. 2B, the IC tag 48 may be attached to the printed-circuit board 52 that is installed inside the air conditioner 38, and then the information items related to it may be read out. Note that other household apparatuses 40, 42, 44 and 46 can have a similar structure.

### <IC tag reader and writer>

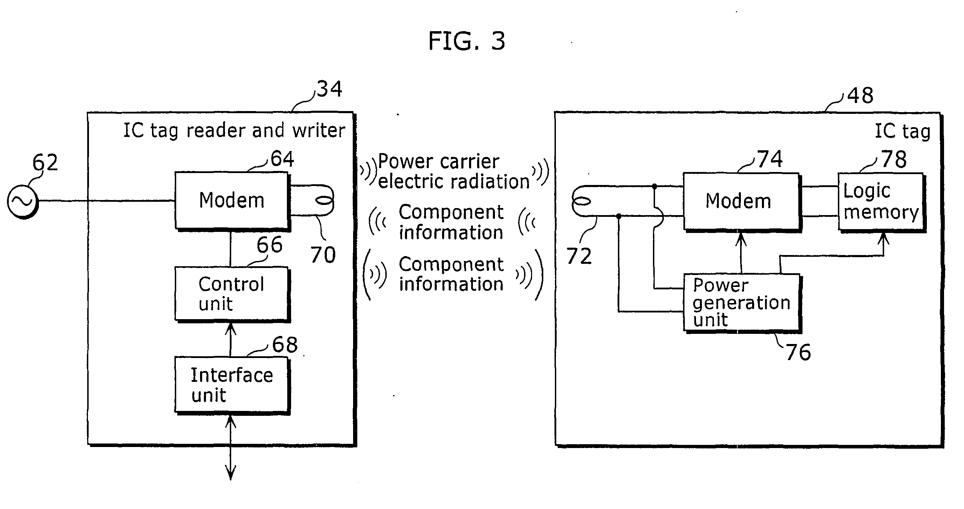

FIG. 3 is a diagram showing the circuit structure of the IC tag reader and writer 34 and the circuit structure of the IC tag 48.

The IC tag reader and writer 34 includes a modem 64 that is connected to the alternating-current power supply 62, a control unit 66, an interface unit 68 and an antenna 70.

The modem 64 is a circuit for communicating with the IC tag 48 via the antenna 70. It sends power carrier electric radiation to the IC tag 48 and receives the information items related to the components that are sent from the IC tag 48. In other words, the modem 64 generates a power carrier electric radiation of a radio frequency (RF) such as 13.56 MHz while receiving a control code outputted from the control unit 66, converts the signal into a power carrier electric radiation, and sends it via the antenna 70. Also, the modem 64 sends the component information items that should be written in the IC tag 48 via the antenna 70.

The control unit 66 controls the modem 64 to send the power carrier electric radiation or stop sending the power carrier electric radiation, and the control unit 66 outputs the component information items received by the modem 64 to outside via the interface 68.

The IC tag 48 includes an antenna 72, a modem 74, a power generation unit 76 and a logic memory 78. The logic memory 78 stores component information items.

The electric generation unit 76 receives the power carrier electric radiation sent from the IC tag reader and writer via the antenna 72 according to an electromagnetic induction type or an electromagnetic coupling type and generates an induced electric power with a high frequency. The electric power generation unit 76 further not only commutes the induced electric power but also smoothes the voltage of the commuted induced electric power at constant value, stores a direct-current power, and keeps supplying the generated direct-current power to the modem 74 and the logic memory 78 while the antenna 72 receives the power carrier electric radiation.

The modem 74 modulates the component information items stored in the logic memory 78 into an electric radiation and outputs the modulated electric radiation to outside via the antenna 72. Note that any modulation method such as an amplitude shift keying (ASK) and a frequency-shift keying (FSK) can be used as long as the modulation method matches the demodulation method in the modem 64 of the IC tag reader and writer 34. The modem 74 demodulates the component information items sent from the IC tag reader and writer 34 and writes the component information items to the logic memory 78.

### <recall database apparatus>

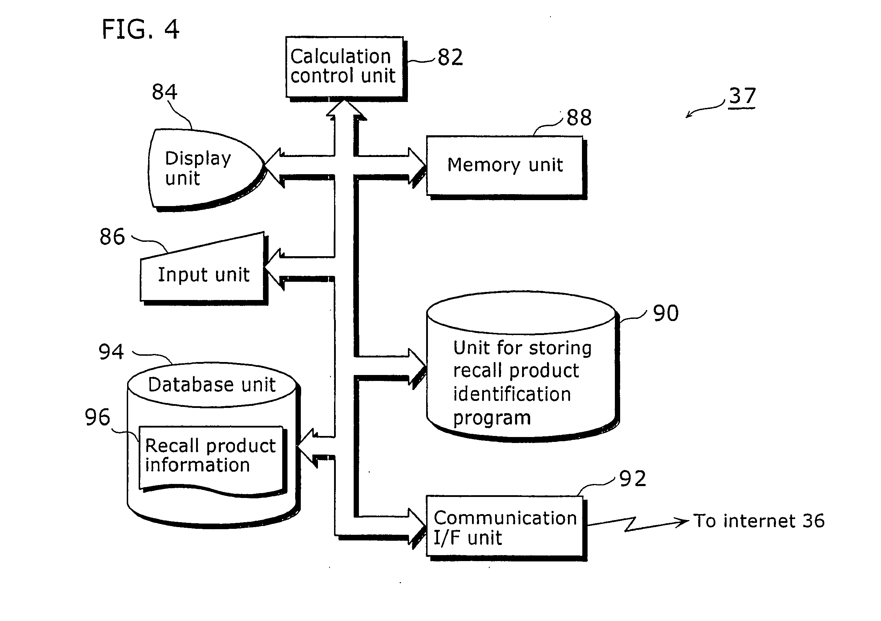

FIG. 4 is a block diagram showing the hardware structure of the recall database apparatus 37. The recall database apparatus 37 is an apparatus for identifying products to be recalled in the household electric apparatuses 38 to 46 that are set in each house 32, including a calculation control unit 82, a display unit 84, an input unit 86, a memory unit 88, a unit for storing recall product identification program 90, a communication interface (I/F) unit 92 and a database unit 94. The recall database apparatus 37 may be set at the manufacturer of each product or various organizations such as a trade association.

The calculation control unit 82 is, for example, a central processing unit (CPU) or a numeric processor and the like. The calculation control unit 82 loads, according to an instruction from a user, a program necessary for the memory unit 88 from the unit for storing recall product identification program 90 so as to execute the program and controls components 84 to 94 according to the execution result.

The display unit 84 is, for example, a cathode-ray tube (CRT) or a liquid crystal display (LCD), and the input unit 86 is, for example, keyboards or a mouse. These units are used for, for example, enabling an operator to communicate with the recall database apparatus 37 under the control by the calculation control unit 82.

The communication I/F unit 92 is, for example, a local area network (LAN) adapter or the like. The communication I/F unit 92 is used for communication between the recall database apparatus 37 and respective IC tag readers and writers 34 that are set in respective houses 32.

The memory unit 88 is, for example, a random access memory (RAM) that provides a work area for the calculation control unit 82. The unit for storing recall product identification program 90 is, for example, a hard disc storing a program for identifying a product to be recalled by which a function of the recall database apparatus 37 is realized.

The database unit 94 is, for example, a hard disc storing recall product information 96 on the product to be recalled (such as manufacturing periods and the manufacturer names of the components in use) and the like.

### <information items written in the IC tag>

The information items such as the information items related to the respective household appliances 38 to 46, the information items related to the units included in the respective household appliances 38 to 46 or the information items related to the components included in the respective units are written in the respective IC tags 48 of the above-mentioned household appliances 38 to 46 or the respective IC tags 48 of the printed-circuit boards 52.

For example, the information items related to each of the household appliances 38 to 46 include the manufacturer name of the household appliance, a manufacturing number, a manufacturing period and the like. These information items are, for example, stored in the IC tags 48 that are set at corresponding household appliances 38 to 46.

Also, the information items related to the units included in each of the household appliances 38 to 46 include the manufacturer name of the unit such as a printed-circuit board, a product number, a lot number and the period when the unit is set up. Note that, taking an example where the household appliance is the air conditioner 38, a unit except the printed-circuit board may be a compressor or a piping unit. Note that these information items are stored in, for example, the IC tags 48 that are respectively set at the corresponding household appliances 38 to 46.

Also, taking an example where the unit is the printed-circuit board 52, the information items related to the components included in each of the units includes the later-listed information items (1) to (9). These information items are written in, for example, the IC tag 48 that is set at a printed-circuit board 52. Note that, when a unit is manufactured, the manufacturing information of the unit is written in the IC tag 48 that is set at a part other than the printed-circuit board 52 in the unit.
(1) items of misregistration information in printing, spreading glue and mounting components and the like
(2) information items related to a manufacturing method executed by a process apparatus such as items of temperature information and various items of concentration information of nitrogen '
(3) items of quality information such as the manufacturer name of a component, a lot number, a manufacturing period, a type, a product number, a composition, a size, a color and a heat characteristic (such as a heat resistant temperature and a temperature acceleration)
(4) items of operation information such as the name of manufacturing plant, a mounter name, an operator name and a manufacturing date
(5) items of quality control information such as the operating ratio of each mounter, the pick-up rate of each component, the mounting rate of each component, various kinds of error rates, component supply information, the information related to the pick-up nozzle in use, the information related to the camera in use, the information related to the head in use, the information related to the cassette in use and tact time
(6) items of quality information such as control value information related to a material that deteriorates with age: information items such as the processing time which starts from the time when the later-explained solder printer 102 prints a cream solder and finishes at the time when the solder is fixed in the later-explained reflow oven 109 or the processing time which starts from the time when glue is spread in the later-explained glue dispenser 104 and finishes at the time when the spread glue is solidified in the later-explained glue curing oven 108.
(7) information items related to a printed-circuit board such as a material, a manufacturing period, the distortion information obtained from CAD data, the information related to locations where components are mounted, the information related to mounting support pins, a heat characteristic and the names of the integrated products
(8) information items related to a solder such as the product number, the lot number, the composition and the heat characteristic
(9) information items related to glue such as the product number, the lot number, the composition and the heat characteristic
(10) information items related to a printed-circuit board such as the name, the serial number, the manufacturing date and the lot number; and information items related to a product such as the name, the serial number, the manufacturing date and the lot number

### <information item writing in the IC tag on a printed-circuit board>

The above-mentioned information items are written in the IC tag 48 in the process of manufacturing products. Information writing in the IC tag 48 at the time of mounting electric components on a printed-circuit board 52 will be explained below.

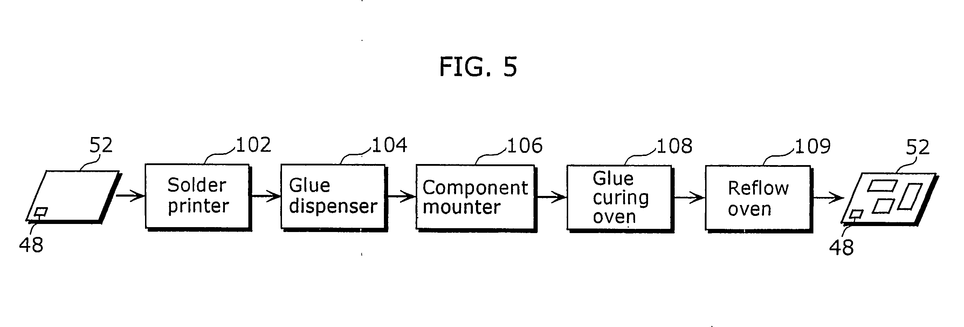

FIG. 5 is a diagram showing the outline structure of the mounting system of mounting electric components on the printed-circuit board 52. This mounting system is the system for mounting electric components on the printed-circuit board 52 and writing manufacturing control information and the like in the IC tag 48 that is set on the printed-circuit board 52, and the mounting system includes a solder printer 102, a glue dispenser 104, a component mounter 106, a glue curing oven 108 and a reflow oven 109.

The printed-circuit board 52 is sent according to the order indicated by arrows in the figure, and respective apparatuses execute processing of the printed-circuit board 52 in order.

The solder printer 102 prints a cream solder on the printed-circuit board 52 and writes the information items related to a solder such as the composition and the heat characteristic in the IC tag 48.

The glue dispenser 104 spreads glue for gluing electric components to the printed-circuit board and writes the information items related to the characteristics of the glue such as the composition and the heat characteristic, and the items of information misregistration in spreading glue in the IC tag 48.

The mounter 106 mounts electric components on the printed-circuit board 52 and writes component information items such as the manufacturer name of the mounted electric components or quality control information and the like such as the information items related to the camera and the nozzle in use in the IC tag 48. The mounter 106 will be explained in detail later.

The glue curing oven 108 hardens the glue spread by the glue dispenser 104 by using heat and writes the information items related to the temperature at the time of heating in the IC tag 48.

The reflow oven 109 melts the solder spread by the solder printer 102 and then solidifies the melted solder so as to fix the electric components and writes the information items related to the temperature at the time of fixation in the IC tag 48.

The processing explained up to this point enables mounting electric components on the printed-circuit board 52 and writes the quality information, quality control information and the like at the time of mounting in the IC tag 48 that is set on the printed-circuit board 52.

### <mounter 106>

Next, the mounter 106 included in the mounting system shown in FIG. 5 will be explained in detail.

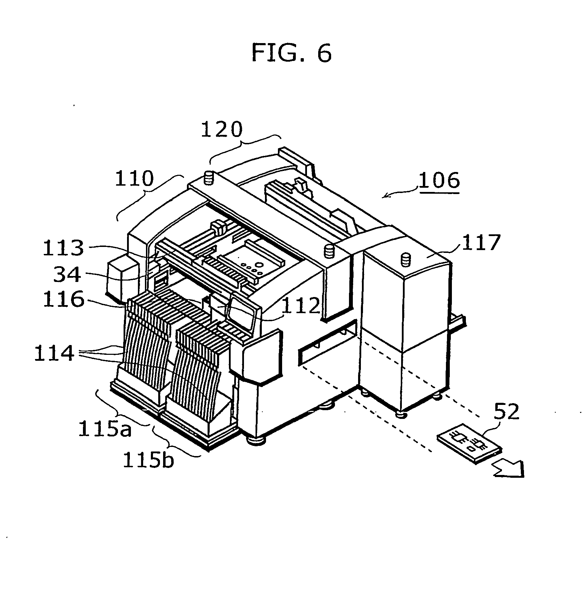

FIG. 6 is an external view of the mounter 106.

The mounter 106 is equipped with two sub stages (a front stage 110 and a rear stage 120) that operate simultaneously and independently of one another, or in concert, or even alternately. Each of these stages 110 and 120 is a perpendicular robotic mounting stage and includes two component supplying units 115a and 115b, a line gang pickup head 112, an XY robot 113, a component recognizing camera 116, a tray supplying unit 117 and an IC tag reader and writer 34. The component supplying units 115a and 115b are each made up of an array of up to 48 component feeders 114 that store component tapes. The line gang pickup head 112 has 10 pickup nozzles (hereafter simply "nozzles") that can pick up a maximum of 10 components from the component feeders 114 and mount them onto the printed-circuit board 20. The XY robot 113 moves the line gang pickup head 112. The component recognizing camera 116 investigates the picked-up state of the components that have been picked up by the line gang pickup head 112 in two or three dimensions. The tray supplying unit 117 supplies tray components. The IC tag reader and writer 34 reads the information items stored in the IC tag 48 and writes the information items in the IC tag 48. The IC tag 48 is attached to the reel on which the component tape is wound up. Each of the stages mounts components on the printed-circuit board independently from (in parallel with) the other stage.

In this specification, the expression "component tape" refers to a tape (a carrier tape) in which a number of the same type of components have been arranged, with such tape being supplied from a reel (a supply reel) or the like around which the tape has been wound. Component tapes are usually used to supply relatively small components called "chip components" to a mounter. However, during the optimization process, a "component tape" refers to data that specifies a group of components of the same type that are assumed to have been arranged on a virtual tape). In the process called "component division", a group of components of the same type (that would potentially be arranged on a single component tape) are divided between a plurality of component tapes. Note that "component type" indicates the type of the electric components such as a resistance and a capacitor.

Note that components supplied by a component tape are sometimes called "taped components".

In more detail, the mounter 106 is a mounting device that includes the functions of both a mounting device commonly called a high-speed mounter and a mounting device called a multi-function mounter. A high-speed mounter is a device that is capable of mounting electronic components that are 10mm or smaller in around 0.1 seconds, while a multi-function mounter is a device that can mount large electronic components that are 10mm or larger, irregularly shaped components like switches and connectors, and IC components like Quad Flat Package (QFP) or Ball Grid Array (BGA) components.

In short, the mounter 106 is designed so as to be able to mount almost all types of electronic components from 0.6mm by 0.3mm chip resistors to 200mm connectors, with a production line being formed by arranging the required number of mounters 106 in a line.

### <structure of the mounter>

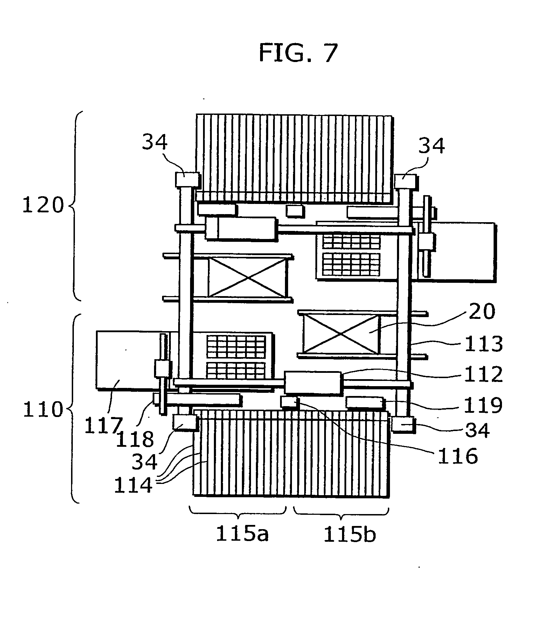

FIG.7 is a plan view showing the main structure of the mounter 106.

A shuttle conveyor 118 is a moving table (a collection conveyor) on which a component taken from the tray supplying unit 117 is placed and which is moved to a predetermined position where the line gang pickup head 112 can pick up components from the shuttle conveyor 118. A nozzle station 119 is a table on which interchangeable nozzles corresponding to various sizes of components are positioned.

The component supplying units 115a and 115b included in each stage 110 (or 120) are provided on the left and right sides of the component recognizing camera 116. The line gang pickup head 112 picks up components from the component supplying unit 115a or 115b, passes by the component recognizing camera 116, and then repeats an operation whereby the line gang pickup head 112 moves to a mounting location on the printed-circuit board 20 and mounts one of the picked-up components. The "mounting location" is the address point on the printed-circuit board at which a component should be mounted. There is a case where the same-kind component is mounted at a different mounting location. The total number of pieces of components arrayed on the component tape concerning the same-kind component (or the total number of mounting locations) matches the number of components of the kind (the total number of components to be mounted).

In this specification, one iteration of the repeated series of processes where the line gang pickup head 112 picks up, transports, and mounts components and the group of components handled in such iteration are both referred to as a "task". As one example, when the line gang pickup head 112 has ten nozzles, the maximum number of components that can be mounted by a single task is ten. It should also be noted that a "pickup operation" refers to all of the operations performed from when the head starts to pick up components to when the line gang pickup head 112 transports the components. In this specification, a pickup operation refers not only to when ten components are picked up by to the line gang pickup head 112 with a single nozzle stroke (a raising and lowering of the line gang pickup head 112), but also when ten components are picked using several nozzle strokes.

One or two IC tag readers and writers 34 are set at each sub stage 110 (or sub stage 120). The IC tag reader and writer 34 sends electric radiation of a predetermined frequency including a read out command to the IC tag 48 and receives, from the IC tag 48, the electric radiation of a predetermined frequency including the information items stored in the IC tag 48. The direction of the electric radiation that is received by the two IC tag reader and writer 34 determines the location of the IC tag 48.

Also, the IC tag reader and writer 34 writes, in the IC tag 48 on the printed-circuit board 52, the operating ratio of the mounter 106, the items of manufacturing control information such as the component pick-up rate, the information items such as a manufacturer name of the mounted components.

The circuit structure of the IC tag reader and writer 34 is the same as the one that has already been explained with reference to FIG. 3, detailed explanation on it will not be repeated here.

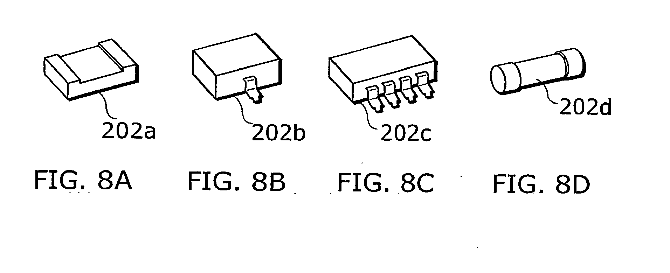

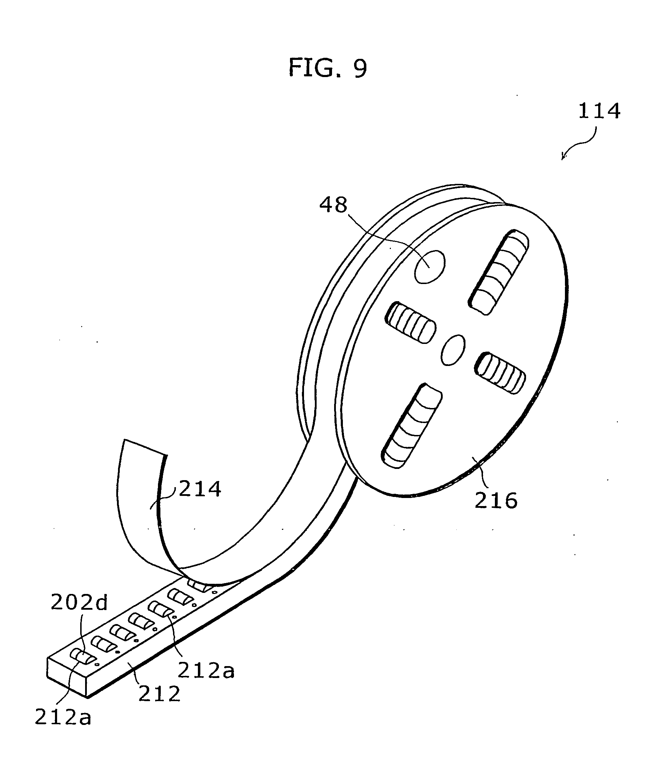

FIG. 8A to 8D are diagrams respectively showing an example of the electric components that are mounted on the printed-circuit board 52, the electric components 202a to 202d that are shown as FIG. 8A to 8D respectively are mounted on the printed-circuit board 52. FIG. 9 is a diagram showing an example of the component cassette 114. The component cassette 114 is supplied to a user in a form of a component tape with the predetermined number of components wound up by a supply reel 216. The component tape is made by storing these various kinds of electric component chips 202a to 202d shown as FIG. 8A to 8D in storage concave parts 212a that are formed on the carrier tape 212 in series at a certain interval and attaching a cover tape 214 on the electric component chips. Note that the form of a part where an electric component is stored is not limited to a concave. An IC tag 48 is attached to the supply reel 216, and the following information items are stored in the IC tag 48: the items of manufacturing information such as the name of the taped components, a head count, the name of manufacturer, the name of manufacturing plant, the manufacturing date and the lot number; and the information items related to the size of the component, the width of the component cassette 114 to which the carrier tape 212 is attached, the pitch of the storage concave part 212a. These information items are written in the IC tag 48 on the printed-circuit board 52 at the time of mounting components. Note that an adhesive tape or a paper tape where components are glued so as to be fixed may be used instead of the carrier tape 212 shown in FIG. 9.

### <recall product identification processing>

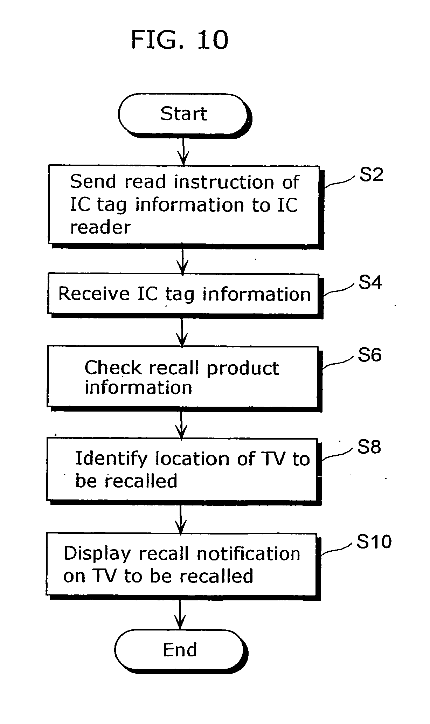

FIG. 10 is a flow chart of recall product identification processing by the recall database apparatus 37. It is assumed that there arises a need to exchange a television receiving set 42 with a new product, and the television receiving set 42 becomes a product to be recalled.

The recall database apparatus 37 instructs the IC tag reader and writer 34 that is set at each house 32 to read the information items stored in the IC tag 48 of the television receiving set 42 via the Internet 36 (S2). The IC tag reader and writer 34 sends the read information items to the recall database apparatus 37. Therefore, the recall database apparatus 37 receives the information items (S4). The recall database apparatus 37 checks the received information items with the recall product information 96 stored in the database unit 94 (S6). In other words, the recall database apparatus 37 checks whether the television receiving set 42 corresponding to the received information is the product to be recalled.

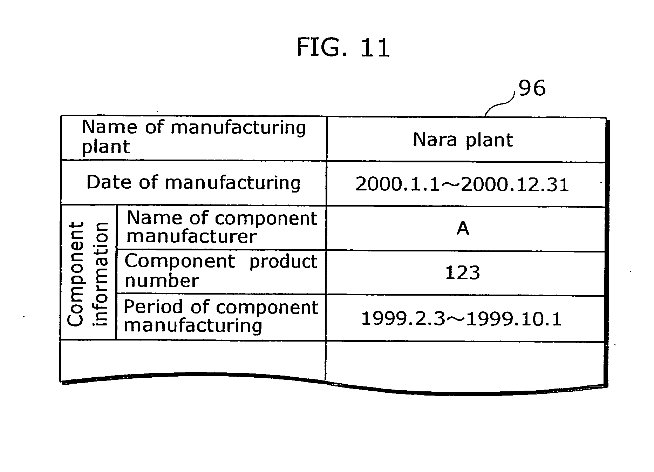

For example, the recall product information 96 shown in FIG. 11 is registered in the database unit 94. The recall product information 96 indicates products to be recalled are: the television receiving sets 42 that were manufactured at the "Nara plant" during the period of "January 1st to December 31st, 2000" and include a component manufactured by "A" with a component number of "123" during the period of "February 3rd to October 1st, 1999". In the case where these information items match the information items stored in the IC tag 48 of the television receiving sets 42, the television receiving sets 42 are identified as the products to be recalled, and the locations of the television receiving sets 42 to be recalled are identified based on the sending sources of these information items (S8). For example, it is possible to identify the locations (such as a telephone number and an address) based on network IDs and the like that are attached to the IC tags 48. This makes it possible to identify which houses have a television receiving set 42 to be recalled. Note that the IC tag 48 holds information items other than the information items shown in FIG. 11 (such as the manufacturer name and the product number of the television receiving set 42, the period of mounting components), and the television receiving sets 42 may be identified based on these information items.

After that, the recall database apparatus 37 sends, to the IC tags 48 of the television receiving sets 42, an instruction for displaying a notification indicating the television receiving set 42 is the product to be recalled on the display screen of the television receiving set 42 identified by the network ID via the IC tag reader and writer 34 (S10) and finishes the processing. The television receiving set 42 that received the instruction displays the recall notification on its display screen so as to notify the user of the recall.

Note that the display processing (S10) is not performed in the case where the product to be recalled is a household appliance that does not have any display unit such as a refrigerator 44.

As explained up to this point, in this embodiment, the information items stored in the IC tag 48 of a product is collected using the IC tag reader and writer 34 that is set at each house so as to judge whether the product is the one to be recalled and identify the location of the product to be recalled. Therefore, unlike the conventional way, it is possible to collect products to be recalled efficiently, without notifying users of the recall using a newspaper advertisement or the like.

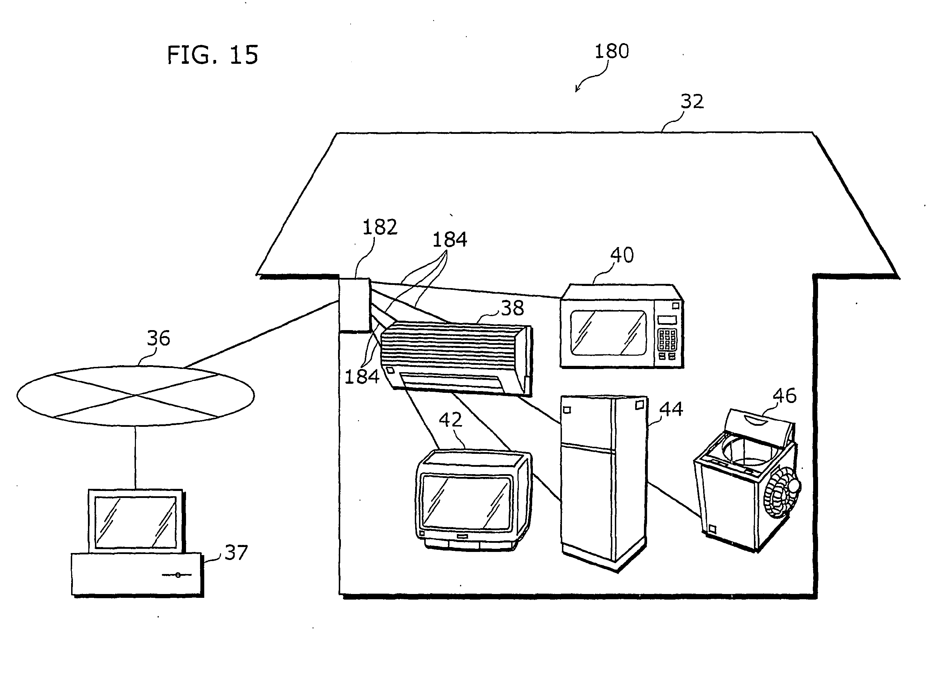

For example, in the first embodiment, as shown in FIG. 15, it is possible to set a modem 182 inside the house 32, use a wired system in order to communicate with the household appliances 38 to 46, and use a telephone line in order to connect to the Internet 36. In this case, an IC tag reader and writer (not shown in any figure) is set at each of the household appliances 38 to 46 so that each of the IC tag reader and writer can read the information items stored in the IC tag 48 in each of the household appliances 38 to 46 and send the information items to the recall database apparatus 37 via the modem 182.

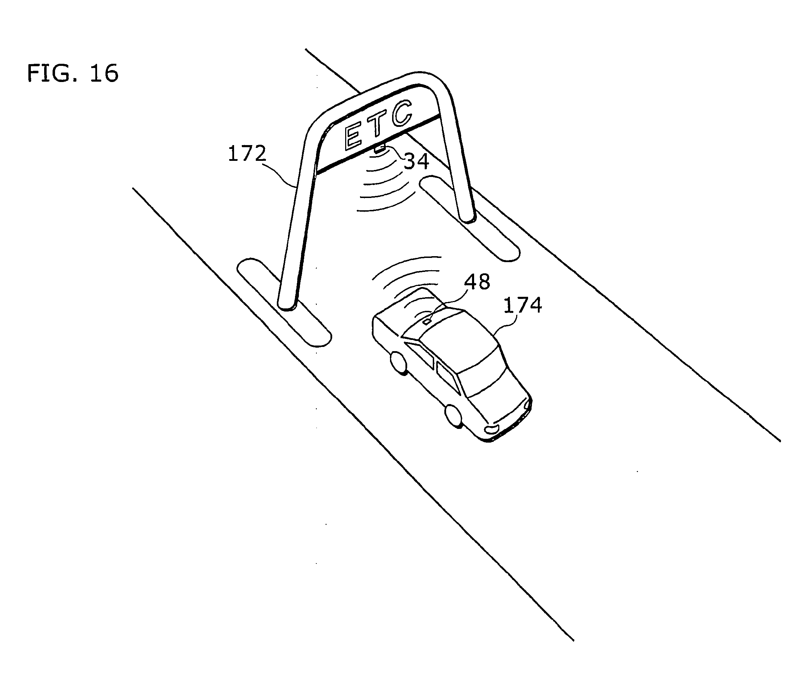

Also, household appliances are the products to be recalled in the explanation of the first embodiment, but the products to be recalled are not limited to household appliances, that is, they may be other products. For example, the products to be recalled may be cars. FIG. 16 is an external view of the system for identifying the cars to be recalled using an electronic toll collection system (ETC). As shown in FIG. 16, an IC tag 48 is attached to a car 174 and, the IC tag 48 including various kinds of information items at the time of manufacturing the car 174. Also, an IC tag reader and writer 34 is set at an ETC gate 172 so that the information items stored in the IC tag 48 of the car 174 can be read out every time a car 174 passes through the ETC gate 172. The read information items are sent to the recall database apparatus that is not shown in any figure and receives a judgment whether it is the product to be recalled. Note that the location where an IC tag reader and writer is set is not limited to the ETC gate 172, an IC tag reader and writer 34 may be set at a traffic signal, a speed detector, a number plate reader and the like.

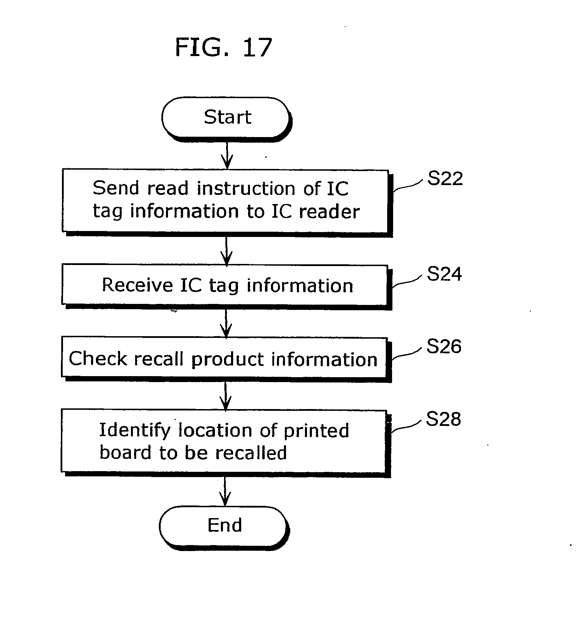

In addition, an object to be recalled may be a printed-circuit board 52 that is installed in an apparatus instead of an apparatus itself. FIG. 17 is a flow chart of processing for identifying a printed-circuit board to be recalled performed by a recall database apparatus.

The recall database apparatus 37 sends an instruction, to the IC tag reader and writers 34 set at each house 32 via the Internet 36, of reading the information items stored in the IC tag 48 of the printed-circuit boards 52 installed in respective apparatuses 38 to 46 (S22). The IC tag reader and writer 34 sends the read information items to the recall database apparatus 37. In this way, the recall database apparatus 37 receives the information items (S24). The recall database apparatus 37 checks the received information items with the recall product information 96 stored in the database unit 94 (S26). In other words, the recall database apparatus 37 examines whether the printed-circuit boards 52 corresponding to the received information items are the printed-circuit boards to be recalled or not.

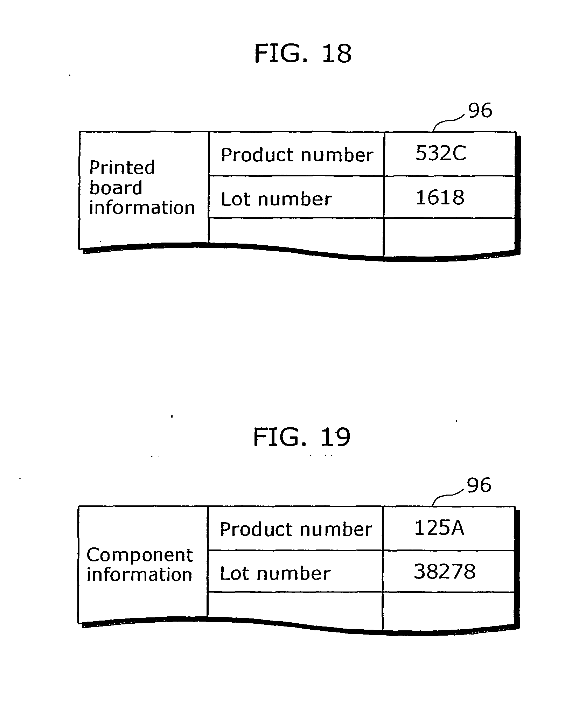

For example, the recall product information 96 shown in FIG. 18 is registered in the database unit 94. In other words, the printed-circuit board 52 whose product number is "532C" and whose lot number is "1618" is determined as the printed-circuit board to be recalled, and in the case where these information items match the respectively corresponding information items stored in the IC tag 48 of the printed-circuit board 52, the location of the printed-circuit board 52 to be recalled is identified based on the sending source of the information item (S28). Note that some lot numbers of printed-circuit boards are assigned by a manufacturer of the printed-circuit boards 52 and the others are assigned by a manufacturer of a mounter that mounts components on a printed-circuit boards 52, and it is also possible to identify a printed-circuit boards 52 to be recalled using these lot numbers assigned in both ways or in either way.

Also, recall product information 96 shown in FIG. 19 may be registered in the database unit 94. In other words, the printed-circuit board 52 on which a component whose product number is "125A" and whose lot number is "38278" is mounted is the printed-circuit board to be recalled. In the case where these information items match the respectively corresponding information items stored in the IC tag 48 of the printed-circuit board 52, the printed-circuit board 52 is identified as the printed-circuit board to be recalled and the location of the printed-circuit board 52 to be recalled may be identified based on the sending source of the information item.

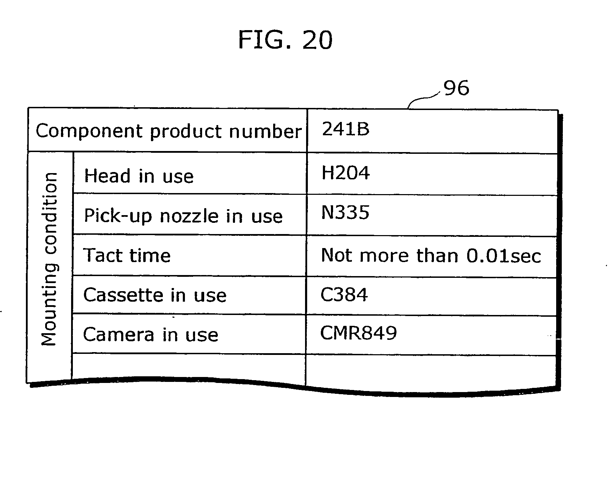

In addition, recall product information 96 shown in FIG. 20 may be registered in the database unit 94. In other words, the printed-circuit board 52 on which a component whose product number is "241B" is mounted and satisfies the following conditions at the time of mounting the component is the printed-circuit board 52 to be recalled. These conditions at the time of mounting a component is: the head number used at the time of mounting is "H204"; the pick-up nozzle number in use is "N335"; the tact time is "not more than 0.01 second; the cassette number in use is "C384"; and the camera in use is "CMR849". In the case where these conditions and the component number match the respectively corresponding information stored in the IC tag 48 of the printed-circuit board 52, the printed-circuit board 52 is identified as the printed-circuit board to be recalled, and the location of the printed-circuit board 52 to be recalled may be identified based on the sending source of the information item. In this way, identifying the printed-circuit board 52 to be recalled based on the conditions at the time of component mounting makes it possible to easily identify the location of the printed-circuit board 52 and collect the printed-circuit board 52 on which a component is mounted based on a wrong condition even in the case where it is found that the condition employed at the time of component mounting was wrong. Note that plural items such as a head, a pick-up nozzle, a tact, a cassette, and a camera are specified as mounting conditions of a component to be recalled in the above-mentioned case, but there is a case where a single item is specified as a mounting condition of a component to be recalled.

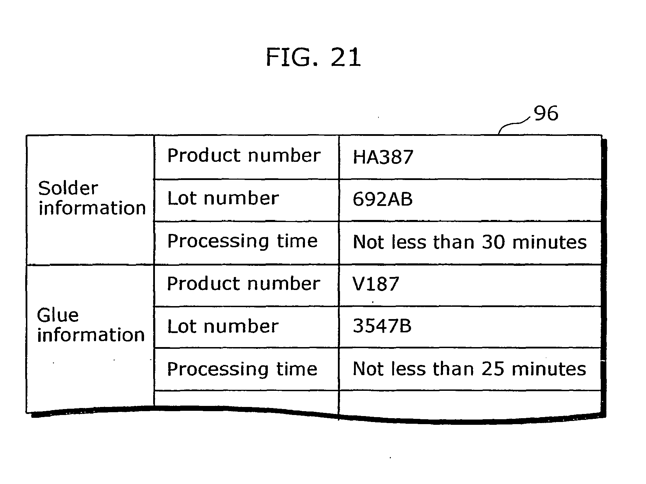

In addition, recall product information 96 shown in FIG. 21 may be registered in the database unit 94. In other words, a printed-circuit board 52 to be recalled is identified based on the conditions related to the material that deteriorates with age. For example, as conditions related to the material that deteriorates with age, two types of conditions that are conditions concerning a solder and conditions concerning glue are registered in the recall product information 96. Conditions concerning a solder that are shown are: the product number of a cream solder printed on the printed-circuit board 52 is "HA387"; the lot number is "692AB"; and the processing time which starts from the time when the solder printer 102 prints a cream solder and finishes at the time when the cream solder is fixed in the reflow oven 109 is "not less than 30 minutes". Conditions concerning glue that are shown are: the product number of glue spread on the printed-circuit board 52 is "V187"; the lot number is "3547B"; and the processing time which starts from the time when the glue dispenser 104 spreads glue and finishes at the time when the spread glue is solidified in the glue curing oven 108 is "not less than 25 minutes". In the case where these two types of conditions match the information items stored in the IC tag 48 of the printed-circuit board 52, the printed-circuit board 52 is identified as the printed-circuit board to be recalled, and the location of the printed-circuit board 52 to be recalled may be identified based on the sending source of the information item. In this way, as to a material that deteriorates with age, its quality may deteriorate in the case where the processing time exceeds the allowed processing time. This makes it possible to easily identify the location of the printed-circuit board 52 and collect the printed-circuit board 52 including a material that may have a quality problem.

Further, in the first embodiment, it is possible to give the products that have already been identified as the products to be recalled a function for downloading a firmware from the recall database apparatus 37 and updating the firmware automatically.

Note that the product may write the information item indicating that the firmware has already been updated in the IC tag 48 of the updated product after the update. The recall database apparatus 37 may give an instruction of writing the information item or the appliance with the IC tag 48 may write the information item. Also, the recall database 37 may receive the information item indicating whether the firmware has successfully updated or not via the communication network after the update of the firmware.

Note that a date or time for update may be previously set in the recall database apparatus 37 so that the firmware can be automatically updated when it becomes the predetermined date or time. Also, after whether the appliance with an IC tag 48 is operated or not is checked, the firmware may be automatically updated in the case where the appliance is not operated. Further, appliances such as household appliances 38 to 46, to each of which an IC tag 48 is attached may set a date or time for update and update the firmware when it becomes the predetermined date or time. In addition, it is also possible to cause the appliances to update their firmware automatically at date or time that has already been set by a user of the household appliances 38 to 46 respectively.

### Industrial Applicability

The present invention is available as a method for identifying apparatuses to be recalled, a method for recalling household appliances or cars.

## Claims

1. A method for identifying a household appliance to be recalled, comprising:
reading information items related to the household appliance at the time when it is manufactured and stored in an integrated circuit (IC) tag attached to the household appliance at the time of its manufacturing;
sending said read information items to a recall database apparatus (37) via a communication network;
collecting said information items in said recall database apparatus (37);
checking the collected information items with respectively corresponding information items related to the household appliance to be recalled;
identifying the household appliance to be recalled, among household appliances, to each of which an IC tag is attached, based on a checking result and one of the information items which indicates a sending source stored in the IC tag; and
causing the household appliance to update a firmware of the household appliance identified as the household appliance to be recalled in the identifying step.

2. The method for identifying a household appliance to be recalled according to Claim 1,
wherein the IC tag holds one or more information items related to the household appliance such as a manufacturer name, a product number and a manufacturing period, and
in the checking, step ( i ) one or more information items related to the household appliance such as the manufacturer name, the product number and the manufacturing period that are collected in the colleting are checked with ( ii ) one or more information items related to the household appliance to be recalled, ( i ) and ( ii ) being in a one-to-one correspondence.

3. The method for identifying a household appliance to be recalled according to Claim 1,
wherein the IC tag is attached to a printed-circuit board that constitutes the household appliance, and
in the identifying step, the printed-circuit board to be recalled, among printed-circuit boards, to each of which an IC tag is attached, is identified based on a checking result and one of the information items which indicates a sending source stored in the IC tag.

4. The method for identifying a household appliance to be recalled according to Claim 3,
wherein the IC tag holds one or more information items related to a component mounted on the printed-circuit board that constitutes the household appliance such as a component manufacturer name, a component number and a component manufacturing period, and
in the checking step, ( i ) one or more information items related to the component mounted on the printed-circuit board that constitutes the household appliance such as the component manufacturer name, the component number and the component mounting period that are collected in the colleting are checked with ( ii ) one or more information items related to the component mounted on the printed-circuit board to be recalled, ( i ) and ( ii ) being in a one-to-one correspondence.

5. The method for identifying a household appliance to be recalled according to Claim 3, further comprising
wherein the IC tag stores a component number and a mounting condition of the component that is mounted on the printed-circuit board that constitutes the household appliance,
in the checking step, ( i ) the component number and the mounting condition of the component that is mounted on the printed-circuit board that constitutes the household appliance collected in the collecting are checked with ( ii ) the component number and the mounting condition of the component mounted on the printed-circuit board to be recalled, ( i ) and ( ii ) being in a one-to-one correspondence.

6. The method for identifying a household appliance to be recalled according to Claim 3, further comprising
wherein the IC tag stores information items related to a Material that deteriorates with age used for the printed-circuit board that constitutes the household appliance,
in the checking step, ( i ) the information items related to the material that deteriorates with age used for the printed-circuit board that constitutes the household appliance collected in the colleting are checked with ( ii ) the information items related to the material that deteriorates with age used for the printed-circuit board to be recalled, ( i ) and ( ii ) being in a one-to-one correspondence.

7. The method for identifying a household appliance to be recalled according to Claim 1, further comprising
causing a display unit to display a notification that the household appliance is the household appliance to be recalled in the case where the household appliance identified as the household appliance to be recalled in the identifying step has a display unit.

8. The method for identifying a household appliance to be recalled according to Claim 1, further comprising
writing, after the update, that the firmware has already been updated on the IC tag attached to the household appliance whose firmware has already been updated.

9. The method for identifying a household appliance to be recalled according to Claim 1, further comprising
collecting an information item indicating whether the update of the firmware has successfully finished or not via a communication network after the update.

10. The method for identifying a household appliance to be recalled according to Claim 1,
wherein, in the updating step, causing the household appliance to update the firmware of the household appliance identified as the household appliance to be recalled in the identifying at a predetermined date or time.

11. The method for identifying a household appliance to be recalled according to Claim 1, further comprising
examining an operating status of the household appliance to which the IC tag is attached,
wherein, in the updating step, causing the household appliance to update the firmware of the household appliance identified as the household appliance to be recalled in the identifying when the household appliance is not operated.

12. The method for identifying a household appliance to be recalled according to Claim 1,
wherein the reading step includes:
reading said information items stored in the IC tag attached to the household appliance in a non-contact manner.

13. A program causing a computer to execute:
collecting information items stored in an IC tag attached to a household appliance via a communication network;
checking the collected information items with respectively corresponding information items related to the household appliance to be recalled; and
identifying the household appliance to be recalled, among household appliances, to each of which an IC tag is attached, based on a checking result and one of the information items which indicates a sending source stored in the IC tag; and
causing the household appliance to update a firmware of the household appliance identified as the household appliance to be recalled in the identifying step.

14. A device for identifying a household appliance to be recalled, comprising:
an IC tag reading unit operable to read information items related to the household appliance at the time when it is manufactured and stored in an integrated circuit (IC) tag attached to the household appliance at the time of its manufacturing;
a recall database apparatus (37) operable to receive said read information items via a communication network;
a collecting unit operable to collect said information items in said recall database apparatus (37);
a memory unit operable to memorize information items related to the household appliance to be recalled;
a checking unit operable to check information items collected in the collecting with respectively corresponding information items related to the household appliance to be recalled; and
an identifying unit operable to identify the household appliance to be recalled, among household appliances, to each of which an IC tag is attached, based on a checking result and an information item which indicates a sending source stored in the IC tag; and
a firmware updating unit operable to cause the household appliance to update a firmware of the household appliance identified as the household appliance to be recalled.

## Patentansprüche

1. Verfahren zum Identifizieren eines zurückzurufenden Haushaltsgeräts, mit den folgenden Schritten:
Lesen von Informationselementen, die das Haushaltsgerät betreffen und in einem bei der Herstellung des Haushaltsgeräts angebrachten IC-Aufkleber (IC: Integrierter Schaltkreis) gespeichert werden, bei der Herstellung des Haushaltsgeräts;
Senden der gelesenen Informationselemente über ein Kommunikationsnetzwerk an eine Rückruf-Datenbankvorrichtung (37);
Erfassen der Informationselemente in der Rückruf-Datenbankvorrichtung (37);
Abgleichen der erfassten Informationselemente mit jeweils entsprechenden Informationselementen, die das zurückzurufende Haushaltsgerät betreffen;
Identifizieren des zurückzurufenden Haushaltsgerätes unter mehreren Haushaltsgeräten, an denen jeweils ein IC-Aufkleber angebracht ist, aufgrund eines Abgleich-Ergebnisses und eines der in dem IC-Aufkleber gespeicherten Informationselemente, das eine Sendequelle bezeichnet; und
Veranlassen des Haushaltsgeräts, das in dem Identifizierungsschritt als zurückzurufendes Haushaltsgerät identifiziert wird, eine Firmware des Haushaltsgeräts zu aktualisieren.

2. Verfahren zum Identifizieren eines zurückzurufenden Haushaltsgeräts nach Anspruch 1, **dadurch gekennzeichnet, dass**
der IC-Aufkleber ein oder mehrere Informationselemente, die das Haushaltsgerät betreffen, wie etwa eine Herstellerbezeichnung, eine Erzeugnisnummer und einen Herstellungszeitraum, und
in dem Abgleichschritt (I) ein oder mehrere bei dem Erfassen erfassten Informationselemente, die das Haushaltsgerät betreffen, wie etwa die Herstellerbezeichnung, die Erzeugnisnummer und der Herstellungszeitraum, mit (II) einem oder mehreren Informationselementen abgeglichen werden, die das zurückzurufende Haushaltsgerät betreffen, wobei (I) und (II) eine Eins-zu-Eins-Entsprechung haben.

3. Verfahren zum Identifizieren eines zurückzurufenden Haushaltsgeräts nach Anspruch 1, **dadurch gekennzeichnet, dass**
der IC-Aufkleber an einer Leiterplatte angebracht wird, die das Haushaltsgerät verkörpert, und
in dem Identifizierungsschritt die zurückzurufende Leiterplatte unter mehreren Leiterplatten, an denen jeweils ein IC-Aufkleber angebracht ist, aufgrund eines Abgleich-Ergebnisses und eines der in dem IC-Aufkleber gespeicherten Informationselemente identifiziert wird, das eine Sendequelle bezeichnet.

4. Verfahren zum Identifizieren eines zurückzurufenden Haushaltsgeräts nach Anspruch 3, **dadurch gekennzeichnet, dass**
der IC-Aufkleber ein oder mehrere Informationselemente hält, die eine Komponente betreffen, die auf die das Haushaltsgerät verkörpernde Leiterplatte montiert ist, wie etwa eine Komponentenherstellerbezeichnung, eine Komponentennummer und einen Komponentenherstellungszeitraum, und
in dem Abgleichschritt (I) ein oder mehrere bei dem Erfassen erfassten Informationselemente, die die Komponente betreffen, die auf die Leiterplatte montiert ist, die das Haushaltsgerät verkörpert, wie etwa die Komponentenherstellerbezeichnung, die Komponentennummer und den Komponentenherstellungszeitraum, mit (II) einem oder mehreren Informationselementen abgeglichen werden, die die Komponente betreffen, die auf die zurückzurufende Leiterplatte montiert ist, wobei (I) und (II) eine Eins-zu-Eins-Entsprechung haben.

5. Verfahren zum Identifizieren eines zurückzurufenden Haushaltsgeräts nach Anspruch 3, **dadurch gekennzeichnet, dass**
der IC-Aufkleber eine Komponentennummer und eine Montagebedingung für die Komponente speichert, die auf die das Haushaltsgerät verkörpernde Leiterplatte montiert wird, und
in dem Abgleichschritt (I) die bei dem Erfassen erfasste Komponentennummer und Montagebedingung für die Komponente, die auf die das Haushaltsgerät verkörpernde Leiterplatte montiert ist, mit (II) der Komponentennummer und der Montagebedingung für die Komponente abgeglichen werden, die auf die zurückzurufende Leiterplatte montiert ist, wobei (I) und (II) eine Eins-zu-Eins-Entsprechung haben.

6. Verfahren zum Identifizieren eines zurückzurufenden Haushaltsgeräts nach Anspruch 3, **dadurch gekennzeichnet, dass**
der IC-Aufkleber Informationselemente speichert, die ein für die das Haushaltsgerät verkörpernde Leiterplatte verwendetes Material betreffen, dessen Qualität sich mit dem Alter mindert, und
in dem Abgleichschritt (I) die bei dem Erfassen erfassten Informationselemente, die das für die das Haushaltsgerät verkörpernde Leiterplatte verwendete Material betreffen, dessen Qualität sich mit dem Alter mindert, mit (II) den Informationselementen abgeglichen werden, die das für die zurückzurufende Leiterplatte verwendete Material betreffen, dessen Qualität sich mit dem Alter mindert, wobei (I) und (II) eine Eins-zu-Eins-Entsprechung haben.

7. Verfahren zum Identifizieren eines zurückzurufenden Haushaltsgeräts nach Anspruch 1, das weiterhin den Schritt aufweist, in dem Fall, dass das Haushaltsgerät, das in dem Identifizierungsschritt als zurückzurufendes Haushaltsgerät identifiziert wird, eine Anzeige-Einheit hat, die Anzeige-Einheit zu veranlassen, eine Mitteilung anzuzeigen, dass das Haushaltsgerät ein Haushaltsgerät ist, das zurückzurufen ist.

8. Verfahren zum Identifizieren eines zurückzurufenden Haushaltsgeräts nach Anspruch 1, das weiterhin den Schritt aufweist, nach der Aktualisierung auf dem IC-Aufkleber, der an dem Haushaltsgerät angebracht ist, dessen Firmware bereits aktualisiert worden ist, zu vermerken, dass die Firmware bereits aktualisiert worden ist.

9. Verfahren zum Identifizieren eines zurückzurufenden Haushaltsgeräts nach Anspruch 1, das weiterhin den Schritt aufweist, über ein Kommunikationsnetzwerk nach der Aktualisierung ein Informationselement zu erfassen, das angibt, ob die Aktualisierung der Firmware erfolgreich abgeschlossen worden ist oder nicht.

10. Verfahren zum Identifizieren eines zurückzurufenden Haushaltsgeräts nach Anspruch 1, **dadurch gekennzeichnet, dass** in dem Aktualisierungsschritt das Haushaltsgerät, das bei der Identifizierung als zurückzurufendes Haushaltsgerät identifiziert wird, an einem vorgegebenen Datum oder zu einer vorgegebenen Uhrzeit veranlasst wird, seine Firmware zu aktualisieren.

11. Verfahren zum Identifizieren eines zurückzurufenden Haushaltsgeräts nach Anspruch 1, das weiterhin das Prüfen eines Betriebszustands des Haushaltsgeräts umfasst, an dem ein IC-Aufkleber angebracht ist, wobei in dem Aktualisierungsschritt das Haushaltsgerät, das bei der Identifizierung als zurückzurufendes Haushaltsgerät identifiziert wird, veranlasst wird, seine Firmware zu aktualisieren, wenn es außer Betrieb ist.

12. Verfahren zum Identifizieren eines zurückzurufenden Haushaltsgeräts nach Anspruch 1, **dadurch gekennzeichnet, dass** der Leseschritt das berührungslose Lesen der Informationselemente umfasst, die in dem an dem Haushaltsgerät angebrachten IC-Aufkleber gespeichert sind.

13. Programm, das einen Computer veranlasst, die folgenden Schritte auszuführen:
Erfassen von Informationselementen, die in einem an dem Haushaltsgerät angebrachten IC-Aufkleber gespeichert sind, über ein Kommunikationsnetzwerk;
Abgleichen der erfassten Informationselemente mit jeweils entsprechenden Informationselementen, die das zurückzurufende Haushaltsgerät betreffen;
Identifizieren des zurückzurufenden Haushaltsgerät unter mehreren Haushaltsgeräten, an denen jeweils ein IC-Aufkleber angebracht ist, aufgrund eines Abgleich-Ergebnisses und eines der Informationselemente, das eine Sendequelle bezeichnet, die in dem IC-Aufkleber gespeichert ist; und
Veranlassen des Haushaltsgeräts, das in dem Identifizierungsschritt als zurückzurufendes Haushaltsgerät identifiziert wird, eine Firmware des Haushaltsgeräts zu aktualisieren.

14. Vorrichtung zum Identifizieren eines zurückzurufenden Haushaltsgeräts, mit:
einer IC-Aufkleber-Leseeinheit (IC: Integrierter Schaltkreis), die so betreibbar ist, dass sie Informationselemente, die das Haushaltsgerät betreffen und in einem bei der Herstellung des Haushaltsgeräts angebrachten IC-Aufkleber gespeichert werden, bei der Herstellung des Haushaltsgeräts liest,
einer Rückruf-Datenbankvorrichtung (37), die so betreibbar ist, dass sie die gelesenen Informationselemente über ein Kommunikationsnetzwerk empfängt;
einer Erfassungseinheit, die so betreibbar ist, dass sie die Informationselemente in der Rückruf-Datenbankvorrichtung (37) erfasst;
einer Speichereinheit, die so betreibbar ist, dass sie Informationselemente speichert, die das zurückzurufende Haushaltsgerät betreffen;
einer Abgleicheinheit, die so betreibbar ist, dass sie Informationselemente, die bei dem Erfassen erfasst werden, mit jeweils entsprechenden Informationselementen abgleicht, die das zurückzurufende Haushaltsgerät betreffen;
einer Identifizierungseinheit, die so betreibbar ist, dass sie das zurückzurufende Haushaltsgerät unter mehreren Haushaltsgeräten, an denen jeweils ein IC-Aufkleber angebracht ist, aufgrund eines Abgleich-Ergebnisses und eines in dem IC-Aufkleber gespeicherten Informationselements identifiziert, das eine Sendequelle bezeichnet; und
einer Firmware-Aktualisierungseinheit, die so betreibbar ist, dass sie das Haushaltsgerät, das als zurückzurufendes Haushaltsgerät identifiziert wird, eine Firmware des Haushaltsgeräts aktualisieren lässt.

## Revendications

1. Procédé d'identification d'un appareil électroménager devant être rappelé, comprenant :
la lecture d'éléments d'information se rapportant à l'appareil électroménager au moment où il est fabriqué et stockés dans une étiquette à circuit imprimé (IC) fixée à l'appareil électroménager au moment de sa fabrication ;
l'envoi desdits éléments d'information lus à un appareil de base de données de rappel (37) par l'intermédiaire d'un réseau de communication ;
la récupération desdits éléments d'information dans ledit appareil de base de données de rappel (37) ;
le contrôle des éléments d'information récupérés avec des éléments d'information correspondant respectivement se rapportant à l'appareil électroménager devant être rappelé ;
l'identification de l'appareil électroménager devant être rappelé, parmi des appareils électroménagers, à chacun desquels une étiquette IC est fixée, sur la base d'un résultat de contrôle et d'un des éléments d'information qui indique une source d'envoi stocké dans l'étiquette IC ; et
la mise à jour par l'appareil électroménager d'un micrologiciel de l'appareil électroménager identifié comme l'appareil électroménager devant être rappelé à l'étape d'identification.

2. Procédé d'identification d'un appareil électroménager devant être rappelé selon la revendication 1,
dans lequel l'étiquette IC contient un ou plusieurs éléments d'information se rapportant à l'appareil électroménager, tels qu'un nom de fabricant, un numéro de produit et une période de fabrication, et
à l'étape de contrôle, (i) un ou plusieurs éléments d'information se rapportant à l'appareil électroménager, tels que le nom du fabricant, le numéro de produit et la période de fabrication qui sont récupérés à l'étape de récupération sont contrôlés avec (ii) un ou plusieurs éléments d'information se rapportant à l'appareil électroménager devant être rappelé, (i) et (ii) étant en correspondance biunivoque.

3. Procédé d'identification d'un appareil électroménager devant être rappelé selon la revendication 1,
dans lequel l'étiquette IC est fixée sur une carte de circuit imprimé qui constitue l'appareil électroménager, et
à l'étape d'identification, la carte de circuit imprimé devant être rappelée, parmi des cartes de circuit imprimé, à chacune desquelles une étiquette IC est fixée, est identifiée sur la base d'un résultat de contrôle et d'un des éléments d'information qui indique une source d'envoi stocké dans l'étiquette IC.

4. Procédé d'identification d'un appareil électroménager devant être rappelé selon la revendication 3,
dans lequel l'étiquette IC contient un ou plusieurs éléments d'information se rapportant à un composant monté sur la carte de circuit imprimé qui constitue l'appareil électroménager, tels qu'un nom de fabricant de composant, un numéro de composant et une période de fabrication de composant, et
à l'étape de contrôle, (i) un ou plusieurs éléments d'information se rapportant au composant monté sur la carte de circuit imprimé qui constitue l'appareil électroménager, tels que le nom du fabricant du composant, le numéro du composant et la période de montage du composant qui sont récupérés à l'étape de récupération sont contrôlés avec (ii) un ou plusieurs éléments d'information se rapportant au composant monté sur la carte de circuit imprimé devant être rappelée, (i) et (ii) étant en correspondance biunivoque.

5. Procédé d'identification d'un appareil électroménager devant être rappelé selon la revendication 3, comprenant en outre
dans lequel l'étiquette IC stocke un numéro de composant et une condition de montage du composant qui est monté sur la carte de circuit imprimé qui constitue l'appareil électroménager,
à l'étape de contrôle, (i) le numéro du composant et la condition de montage du composant qui est monté sur la carte de circuit imprimé qui constitue l'appareil électroménager récupérés à l'étape de récupération sont contrôlés avec (ii) le numéro du composant et la condition de montage du composant qui est monté sur la carte de circuit imprimé devant être rappelée, (i) et (ii) étant en correspondance biunivoque.

6. Procédé d'identification d'un appareil électroménager devant être rappelé selon la revendication 3, comprenant en outre
dans lequel l'étiquette IC stocke des éléments d'information se rapportant à un matériau qui se détériore avec l'âge utilisé pour la carte de circuit imprimé qui constitue l'appareil électroménager,
à l'étape de contrôle, (i) les éléments d'information se rapportant au matériau qui se détériore avec l'âge utilisé pour la carte de circuit imprimé qui constitue l'appareil électroménager récupérés à l'étape de récupération sont contrôlés avec (ii) les éléments d'information se rapportant au matériau qui se détériore avec l'âge utilisé pour la carte de circuit imprimé devant être rappelée, (i) et (ii) étant en correspondance biunivoque.

7. Procédé d'identification d'un appareil électroménager devant être rappelé selon la revendication 1, comprenant en outre
l'affichage par une unité d'affichage d'une notification indiquant que l'appareil électroménager est l'appareil électroménager devant être rappelé dans le cas où l'appareil électroménager identifié comme l'appareil électroménager devant être rappelé à l'étape d'identification a une unité d'affichage.

8. Procédé d'identification d'un appareil électroménager devant être rappelé selon la revendication 1, comprenant en outre
l'écriture, après la mise à jour, que le micrologiciel a déjà été mis à jour sur l'étiquette IC fixée à l'appareil électroménager dont le micrologiciel a déjà été mis à jour.

9. Procédé d'identification d'un appareil électroménager devant être rappelé selon la revendication 1, comprenant en outre
la récupération d'un élément d'information indiquant si la mise à jour du micrologiciel a été menée à bien avec succès ou non par l'intermédiaire d'un réseau de communication après la mise à jour.

10. Procédé d'identification d'un appareil électroménager devant être rappelé selon la revendication 1,
dans lequel, à l'étape de mise à jour, la mise à jour par l'appareil électroménager du micrologiciel de l'appareil électroménager identifié comme l'appareil électroménager devant être rappelé à l'étape d'identification à une date ou une heure prédéterminée.

11. Procédé d'identification d'un appareil électroménager devant être rappelé selon la revendication 1, comprenant en outre
l'examen d'un statut d'utilisation de l'appareil électroménager auquel l'étiquette IC est fixée,
dans lequel, à l'étape de mise à jour, la mise à jour par l'appareil électroménager du micrologiciel de l'appareil électroménager identifié comme l'appareil électroménager devant être rappelé à l'étape d'identification lorsque l'appareil électroménager n'est pas utilisé.

12. Procédé d'identification d'un appareil électroménager devant être rappelé selon la revendication 1,
dans lequel l'étape de lecture inclut :
la lecture desdits éléments d'information stockés dans l'étiquette IC fixée à l'appareil électroménager d'une manière sans contact.

13. Programme faisant qu'un ordinateur exécute :
la récupération d'éléments d'information stockés dans une étiquette IC fixée à un appareil électroménager par l'intermédiaire d'un réseau de communication ;
le contrôle des éléments d'information récupérés avec des éléments d'information correspondant respectivement se rapportant à l'appareil électroménager devant être rappelé ; et
l'identification de l'appareil électroménager devant être rappelé, parmi des appareils électroménagers, à chacun desquels une étiquette IC est fixée, sur la base d'un résultat de contrôle et d'un des éléments d'information qui indique une source d'envoi stocké dans l'étiquette IC ; et
la mise à jour par l'appareil électroménager d'un micrologiciel de l'appareil électroménager identifié comme l'appareil électroménager devant être rappelé à l'étape d'identification.

14. Dispositif pour identifier un appareil électroménager devant être rappelé, comprenant :
une unité de lecture d'étiquette IC utilisable pour lire des éléments d'information se rapportant à l'appareil électroménager au moment où il est fabriqué et stockés dans une étiquette à circuit imprimé (IC) fixée à l'appareil électroménager au moment de sa fabrication ;
un appareil de base de données de rappel (37) utilisable pour recevoir lesdits éléments d'information lus par l'intermédiaire d'un réseau de communication ;
une unité de récupération utilisable pour récupérer lesdits éléments d'information dans ledit appareil de base de données de rappel (37) ;
une unité de mémoire utilisable pour mémoriser des éléments d'information se rapportant à l'appareil électroménager devant être rappelé ;
une unité de contrôle utilisable pour contrôler les éléments d'information récupérés à l'étape de récupération avec des éléments d'information correspondant respectivement se rapportant à l'appareil électroménager devant être rappelé ; et
une unité d'identification utilisable pour identifier l'appareil électroménager devant être rappelé, parmi des appareils électroménagers, à chacun desquels une étiquette IC est fixée, sur la base d'un résultat de contrôle et d'un des éléments d'information qui indique une source d'envoi stocké dans l'étiquette IC ; et
une unité de mise à jour de micrologiciel utilisable pour mettre à jour par l'appareil électroménager un micrologiciel de l'appareil électroménager identifié comme l'appareil électroménager devant être rappelé.
